# EUROPÄISCHE PATENTANMELDUNG

(11) **EP 0 871 025 A1**
(43) Veröffentlichungstag der Anmeldung: **14.10.1998**
(21) Anmeldenummer: 98106141.9
(22) Anmeldetag: 03.04.1998
(51) Int. Cl.: G01N 21/25

(54) **Densitometrisches und spektrometrisches Messverfahren**

(30) Priorität: 09.04.1997 IT BZ970019
(71) Anmelder: VIPTRONIC SrL, I-39042 Bressanone (Bolzano) (IT)
(72) Erfinder: Pallingen, Godehard, 39042 Bressanone (BZ) (IT)
(74) Vertreter: Oberosler, Ludwig

(57) **Zusammenfassung**

Die Erfindung bezieht sich auf ein densitometrisches und/oder spektrometrisches Meßverfahren in welchem das "Spektralprodukt" welches auf die Empfängereinheit der Vorrichtung wirkt von mindestens einer Leuchtdiode (LED) (G, B, R) von der Art mit kurzer Anglüh- und Abglühzeit erzeugt wird welche ein Licht abstrahlt das ein für die Messungen an den entsprechenden Farben ein bereits geeignetes Spektrum aufweist und eine Korrektur mittels Filter nicht erfordern, bzw. nur eine Korrektur mit Schmalbandfiltern erfordert.

## Beschreibung

Es sind Densitometer für die Durchführung densitometrischer, bzw. farbmetrischer Messungen an Kontrollstreifen, zwecks Überwachung des Entwicklungprozesses in Fotolabors und insbesondere zwecks Überprüfung an Kontrollstreifen von Druckbögen und/oder Druckplatten, bzw. direkt am Bild, bekannt.

Die bekannten Densitometer sind verschiedenster Bauart was ihre Abmessungen, ihre Meßeigenschaften, die Auswertung der Maßdaten, ihre Handhabung und den Preis betrifft. Es gibt einfache, handliche tragbare Handmeßgeräte für Einzelmessungen bis zu Skannerdensiometer mit Meßtisch, mit automatischem Meßablauf, mit schnellem Meßvorgang und Verarbeitung der Meßdaten.

Zwischen dem einfachen tragbaren Handdensitometer und dem Skannerdensitometer gibt es natürlich eine Vielzahl von mittleren Geräten.

All diese bekannten Densitometer jedoch verwenden als Lichtquelle für die Messungen eine Lampe mit Glühfaden deren ausgestrahltes Licht mit Filtern, Linsen, Blenden, Spiegeln, Sensoren, optischen Leitern, in Berührung kommt, wobei als optischer Empfänger für das vom Meßfeld reflektierte Licht eine oder mehrere Fotozellen vorgesehen sind. Es ist bekannt, insbesondere für Skannerdensitometer auch pulsierendes Xenon-Licht zu verwenden.

Bisher wurden derartige Lichtquellen welche für diese Zwecke Anwendung finden als Lichtquellen der Lichtart "A" bezeichnet und durch die Normung DIN 16536, zweiter Teil, ISO 5/3, mit Bezug auf "CIE standard illuminant A" erfaßt. Gemäß der bisher gültigen Normen mußte jede einzelne optische Komponente (z.B.: Linsen, Filter, Spiegel, Sensoren, Blenden, optische Leiter, usw.) welche mit mit dem Lichtbündel in Berührung kommt, exakte spektrale Bedingungen erfüllen.

In den neuen Auflagen der Normen wird hingegen von "Spektralprodukt" gesprochen, dabei werden die Merkmale der einzelnen optischen Komponenten mit einbezogen, im Sinne daß in der Praxis die Merkmale der einzelnen optischen Komponenten vernachlässigt werden um insgesamt zum geforderten spektralen Verlauf über die Wellenlänge zu kommen. In den Normen ist dieser Verlauf in eigenen Tabellen definiert. Diese neue Vereinheitlichung und Definition sieht allerdings immer noch als Lichtquelle eine Lampe mit Glühfaden vor, ohne zu berücksichtigen, daß heute die Möglichkeit geboten ist auch Lichtquellen anderer Art zu nutzen und dabei auch ein "Spektralprodukt", welches innerhalb der von den Normen festgelegten Grenzen liegt, zu garantieren.

Tatsachlich weist der Einsatz von Lampen mit Glühfaden als Lichtquelle für densitometrische Messungen folgende Nachteile auf:
a. lange Meßzeiten welche von den beachtenswerten "Anglühzeiten" des Glühfadens (in Abhängigkeit von den Merkmalen und der Wendelgröße des Glühfadens, von der Füllung des Glaskolbens, usw.) abhängt;
b. kurze Lebensdauer (einige hundert Betriebsstunden) wobei auch zu berücksichtigen ist, daß mit der Zeit die Verdampfung des den Glühfaden bildenden, Metalles eine Schwärzung des Glaskolbens und somit eine Lichtabsorbtion bewirkt welche eine Beeinträchtigung der Lichteffizienz zur Folge hat;
c. starker Unterschied der Lichtintensität zwischen Blau und Rot durch Lichtart "A" (Blau nur ca. 10% des Rotlichts);
d. schwierige und spesenaufwendige Herstellung der Filter, insbesondere der Blaufilter, welche einerseits im Tansmissionsbereich hohe Durchlässigkeit aufweisen, anderseits die langwelligen Nebendichten im Langwellenbereich (<10⁻⁵) genügend stark unterdrücken; dies gilt vor allem für Filtersätze vom Typ "Status I" (Interferenzfilter) welche heute nur von weltweit wenigen Herstellern in kaum zufriedenstellender Qualität angeboten werden und daher teuer sind;
e. es ist schwierig eine gute optische Qualität zu erreichen.

Die oben angeführten Nachteile beeinflussen den Bau der Densitometer und wirken sich negativ auf die Meßqualität, auf die Meßzeiten, auf die Lebensdauer der Lichtquelle und auf die Lichteffizienz (Im/W) dieser, aus und somit auch auf die Stromversorgung und auf die Herstellungs- sowie Betriebskosten des Gerätes.

Die Erfindung stellt sich die Aufgabe ein densitometrisches Meßsystem zu schaffen welches geeignet ist die Meßzeiten beachtlich zu vermindern wobei die Lebensdauer und die Effizienz der Lichtquelle erhöht wird, sehr niedrige Betriebsspannungen erforderlich sind, die optische Qualität verbessert wird und die Herstellungs- und Betriebskosten gesenkt werden. Diese Aufgabe wird erfindungsgemäß dadurch gelöst, daß als Lichtquelle mindestens eine Leuchtdiode (LED - Light Emitting Diode) eingesetzt wird welche bereits ein Lichtspektrum ausstrahlt das für die Durchführung der Messungen abgestimmt ist, oder mit einem oder mehreren Filtern bestückt wird um das erforderliche Spektrum zu erhalten.

Diese Leuchtdioden sind elektronische Bauteile welche preisgünstig herstellbar sind und elektrische Belastungen in Lichtstrahlen umwandeln wobei eine "Elektrolumineszenz" erzeugt wir. Diese ergibt bei niedriger Leistungsaufnahme eine hohe Lichtintensität für sämtliche gewünschte Grundfarben und das ausgestrahlte Licht ist, im Vergleich zu jenem welches von einer Lampe mit Glühfaden ausgestrahlt wird, von der Art mit schmalbandigem Spektrum und mit nahezu paralleller Strahlung. Im Falle von üblichen densitometrischen und/oder spektrometrischen Messungen bietet sich die Möglichkeit an, für jede der Grungfarben (C, M, Y) ein spezifisches LED mit oder ohne Filterbestückung einzusetzen oder ein einziges LED für mehrere Farben zu verwenden und dieses mit den notwendigen Filtern zu bestücken. Die LEDs welche spesengünstig herstellbar sind, weisen den Vorteil auf, daß sie in sehr kurzer Zeit (µsec.) die volle Lichtintensität erreichen welche, bei gleicher elektrischer Leistungsaufnahme, viel höher als jene einer Glühlampe ist. Die hohe Lichtintensität ermöglicht es eine beachtenswerte Meßstabilität und somit genaue und verläßliche Meßdaten zu erhalten und die Anzahl sowie die Zeiten der Nacheichungen zu reduzieren. Außer der hohen Lichtintensität ist auch die optische Qualität des Lichtes, im Vergleich zu jener von Glühbirnen, höher, was eine weitere Steigerung der Meßstabilität und somit den Einsatz von weniger aufwendigen Filtern für bestimmte Farben ermöglicht und die Meßqualität, insbesondere an gesättigten Farben, verbessert.

Nachdem die LEDs sehr niedrige Betriebsspannungen benötigen bietet sich der Betrieb mittels Akkumulatoren oder Batterien an wobei sich diese durch eine lange Betriebsdauer auszeichnen werden.

Im Falle von Densitometern und/oder von Spektrofotometern (Farbmeßinstrumenten) ermöglicht der Einsatz von LEDs als Lichtquelle weiters, wegen der kurzen "Anglühzeit" die Anwendung in Skannermeßverfahren bei welchen das schnelle Ablesen des Kontrollstreifens und das Erkennen der geometrischen Form und Anordnung der Farbabstufungen und ihrer Folge längs des Kontrollstreifens erforderlich ist.

Der Einsatz von LEDs für densitometrische und/oder Spektrometrische Meßsysteme ermöglicht es, wegen der oben angeführten optischen Merkmale, eine Vereinfachung sei es was die Übertragungsoptik, als auch was die Empfängeroptik betrifft und somit eine Senkung der Herstellungskosten bei einer Steigerung der Qualität zu erreichen.

Die Erfindung wird anhand zweier, in den beigelegten Zeichnungen schematisch dargestellter, vorzuziehender Ausführungsbeispiele des erfindungsgemäßen densitometrischen und spektrometrischen Meßverfahren näher erklärt; die Zeichnungen erfüllen dabei rein erklärenden, nicht begrenzenden Zweck.

Die Fig. 1 zeigt in perspektivischer Darstellung ein erfindungsgemäßes Meßschema mit nur einer Empfängereinheit, mit drei Leuchtdioden (LED) unterschiedlicher Farbe und mit den nahe an den Lichtquellen vorgesehenen Filtern.

Die Fig. 2 zeigt in perspektivischer Darstellung ein erfindungsgemäßes Meßschema mit zwei Leuchtdioden (LED) für jede Farbe und mit den Filtern welche den jeweiligen Empfängereinheiten vorgesetzt sind; die Empfängereinheit für die Farbe Rot ist nicht mit Filter bestückt weil das von den Leuchtdioden (LED) abgestrahlte Rotlicht keine Korrektur erfordert.

Die Fig. 3 zeigt ein Diagramm welches die Merkmale des von einer Leuchtdiode (LED) abgestrahlten, durch einen Filter beschnittenen, Farblichtes darstellt.

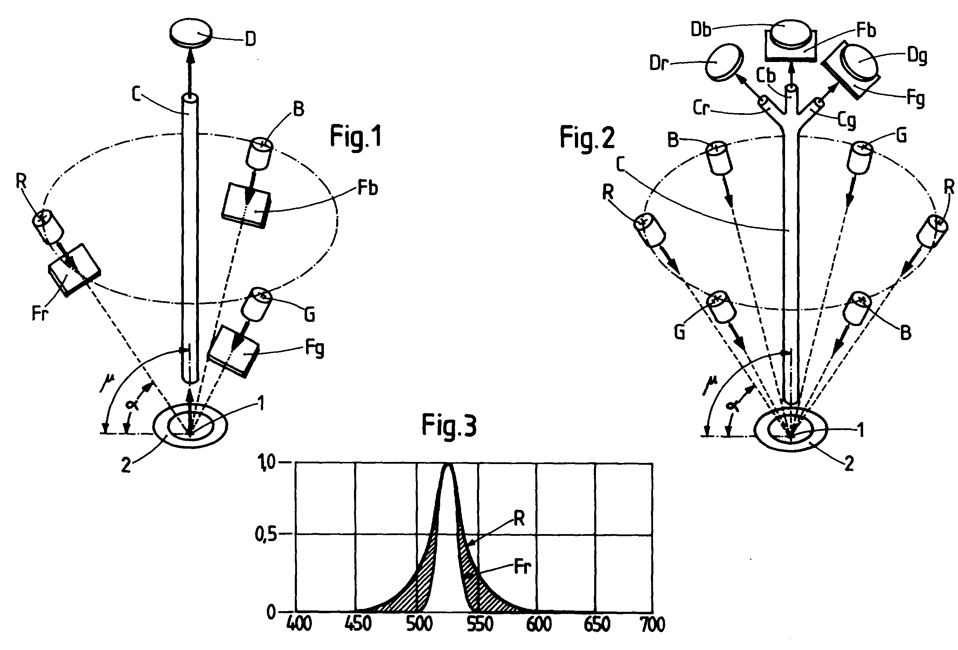

Die Meßstelle 1, z.B. ein Farbfeld eines Kontrollstreifens, ist vorteilhafterweise durch eine Blende 2 begrenzt. Im Falle von Messungen mit Einsatz einer einzigen Empfängereinheit D (Fig. 1) welche z.B eine Fotozelle ist, können die einzelnen Leuchtdioden (LED): G (grün), R (rot), B (blau) so angeordnet sein, daß die Achse des abgestrahlten Lichtes auf den Meßpunkt 1 mit einem bestimmten Einfallswinkel α auftrifft, so daß das reflektierte Licht jeder der einzelnen Lichtquellen G, R, B über optische Leiter C der einzigen Empfängereinheit D zugeleitet wird. Diese Bündel optischer Leiter sind zueinander parallel angeordnet und bilden mit der, den Meßbereich 1 enthaltenden, Ebene einen Winkel µ. Die entsprechenden Filter Fg, Fr, Fb für die Korrektur der verschiedenen Farben sind in diesem Fall längs der Strecke zwischen der Lichtquelle und der Meßstelle 1 vorgesehen. Im Falle von Lichtabstrahlungen mit Merkmalen welche bereits für Messungen geeignet sind, ist die Bestückung mit Filtern überflüssig; es sind bereits Leuchtdioden (LED) erhältlich welche ein Farblicht abstrahlen das diese geeigneten Merkmale aufweist. Natürlich besteht die Möglichkeit mehr als drei LEDs vorzusehen, es kann zum Beispiel vorteilhaft sein zwei LEDs für jede Farbe vorzusehen und diese z. B. so anzuordnen, daß der Einfallwinkel α wohl der gleich ist, die Ausichtung aber unterschiedlich ist.

Zum Beispiel kann es bei Messungen mit hohen Meßgeschwindigkeiten und/oder an Materialien mit eher markanter Oberflächenstruktur vorteilhaft sein die Komponenten, wie in Fig. 2 dargestellt, anzuordnen und zwar mit den zwei LEDs für jede Farbe in Gegenüberstellung. In diesem Fall verzweigen sich die optischen Leiter C im Bereich der, für jede Farbe spezifisch vorgesehenen, Empfängereinheiten Dg, Dr, Db in entsprechende Bündel Cg, Cr, Cb. Die Filter Fg, Fb sind dabei nahe an den Empfängereinheiten Dg und Db vorgesehen; für die Empfängereinheit Dr ist kein Filter vorgesehen weil das von R abgestrahlte Licht bereits die Merkmale welche für die Messung erforderlich sind aufweist. In dem in Fig. 3 gezeigten Diagramm ist der Korrektureffekt eines Filters Fr am Farblicht R dargestellt; der Filter unterdrückt den nicht erwünschten Lichtanteil. In Bezug auf ein von einer Glühbirne abgestrahltes Licht kann der Unterdrückungsbereich des Filters (schraffierte Fläche) eher schmal sein. Beim Einsatz einer Silizium-Empfängereinheit und einer Glühbirne müßte der Filter, Werte welche von 380nm bis 515nm und von 535nm bis 1250nm reichen, unterdrücken; dieser Effekt ist nur unter Einsatz von sehr teuren Glasfiltern von beachtenswerter Stärke (Glas-Interferenzfilter) erreichbar.

## Patentansprüche

1. Densitometrisches und/oder spektrometrisches Meßverfahren bei welchem das "Spektralprodukt" welches auf den Empfängerteil der Vorrichtung wirkt von einer elektrischen Lichtquelle erzeugt wird, deren Anglühzeit die einzelnen Meßzeiten sowie die Folgezeiten bei mehreren Messungen beeinflussen und welches das Ergebnis der erfolgten Abwandlungen während des Durchlaufens von verschiedenen optischen Komponenten wie Linsen, Filter, Blenden, optische Leiter, usw. welche die Sendeoptik und/oder die Empfängeroptik bilden, ist, dadurch gekennzeichnet, daß als Lichtquelle mindestens eine Leuchtdiode (LED)(G, B, R) von der Art mit schneller Anglüh- und Abglühzeit ist.

2. Densitometrisches und/oder spektometrisches Meßverfahren gemäß Patentanspruch 1, dadurch gekennzeichnet, daß die Leuchtdiode (LED) oder -dioden (G, B, R) bereits ein Licht mit geeignetem Spektrum abstrahlen um an den entspechenden Farben die Messungen, ohne den Einsatz von Filtern, oder aufgrund des mit spezifischerem Spektrum abgestralten Lichtes, mit Einsatz von relativ schmalbandigen Filtern (Fg, Fr, Fb), ausführen zu können.

3. Densitometrisches und/oder spektrometrisches Meßverfahren gemäß Patentanspruch 1, dadurch gekennzeichnet, daß die Leuchtdiode oder -dioden (G, R, B) von der Art mit paralleler oder nahezu paralleler Lichtabstrahlung sind wodurch sich der Einsatz von Linsen und Blenden erübrigt, beziehungsweise der Einsatz der optischen Komponenten reduziert wird und/oder wodurch deren Bemessung und Positionierung mit weniger Aufwand und Präzision erfolgen kann.
